(19) **Europäisches Patentamt European Patent Office Office européen des brevets**

(11) **EP 1 122 941 B1**

(12) **EUROPEAN PATENT SPECIFICATION**

(45) Date of publication and mention of the grant of the patent:
**20.08.2008 Bulletin 2008/34**

(51) Int Cl.:
***H04N 1/00*** *(2006.01)* ***H04N 1/44*** *(2006.01)*

(21) Application number: **01300737.2**

(22) Date of filing: **29.01.2001**

(54) **Image processing apparatus**

Bildverarbeitungsgerät

Appareil de traitement d'image

(84) Designated Contracting States:
**DE ES FR GB IT NL**

(30) Priority: **31.01.2000 JP 2000022393**

(43) Date of publication of application:
**08.08.2001 Bulletin 2001/32**

(73) Proprietor: **CANON KABUSHIKI KAISHA Tokyo (JP)**

(72) Inventor: **Iwasaki, Osamu, c/o Canon Kabushiki Kaisha Ohta-ku, Tokyo (JP)**

(74) Representative: **Hitching, Peter Matthew et al Canon Europe Limited 6 Roundwood Avenue Stockley Park Middlesex, Uxbridge UB11 1JA (GB)**

(56) References cited:
**EP-A- 0 665 486     JP-A- 6 105 141 US-A- 5 574 789     US-A- 5 633 932 US-A- 5 982 506**

EP 1 122 941 B1

**Description**

The present invention relates to image processing for preventing the forgery of bills, etc. in a recording system for processing an image and printing the image.

Many systems for preventing the forgery of bills, valuable securities, etc. are designed as input/output device built-in systems such as copying units, etc. However, with an increasing number of personal computers, high-performance peripheral devices such as a scanner, a digital camera, a printer, etc. have been developed. As a result, with these high-performance peripheral devices, the personal computers can output an image at a quality level higher than an image output by the input/output device built-in copying units. Thus, in a personal computer environment, a forgery preventing system is required.

As a characteristic of a forgery preventing system in the personal computer environment, a host computer controls input and output devices. Therefore, it is necessary to allow an image process program of the host computer to recognize specified patterns of bills, valuable securities, etc. A personal computer can output data without a specific image process program only if it is informed of the control code of the output device.

Accordingly, a method of encrypting the control code of the output device is effective to prevent the use of a program other than the specific image process program for a forgery preventing process. The above mentioned method is disclosed by, for example, by US patent No. 5502575 although not in the personal computer environment. FIG. 2 shows an example when this method is applied to the personal computer environment.

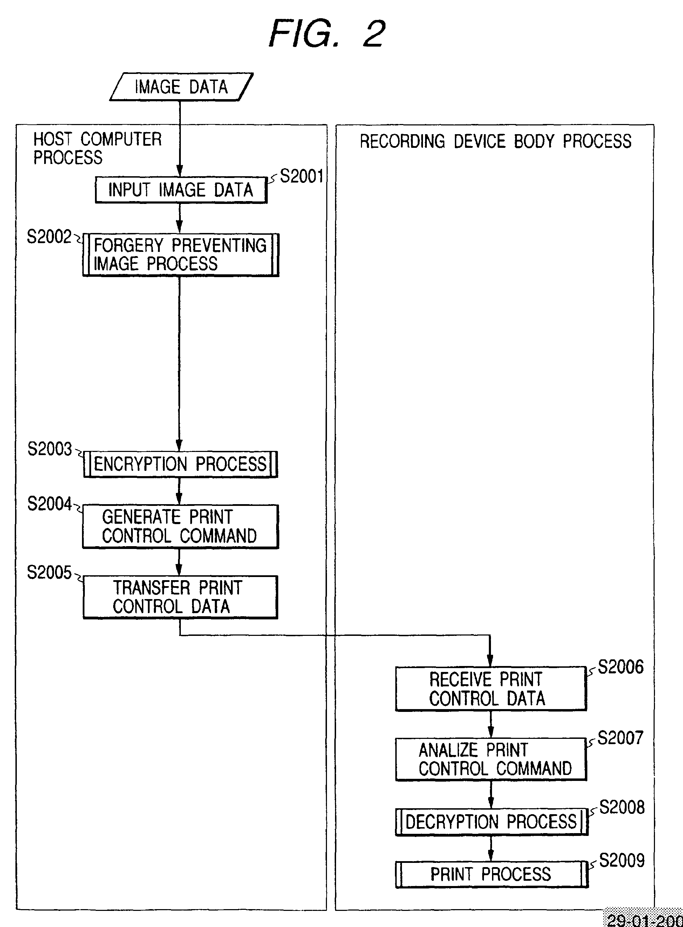

In FIG. 2, the processes in steps S2001 to S2005 are performed by the host computer, and the processes in steps S2006 to S2009 are performed by the recording device.

In the first step S2001, image data is input from an OS (basic software) or an application. Then, in step S2002, an image process including a forgery preventing process is performed. The image process in step S2002 includes color matching, gamma correction, and quantizing processes to convert an input image into print image data. In the forgery preventing process in step S2002, determination is normally made on a specified image by performing a pattern recognizing process. If the input image matches the specified image, then an error process is performed on the image data.

Then, the print data on which an image process has been performed is encrypted in step S2003. The encrypted print data is converted into print control data as a command for control of a printer in step S2004.

The print control data as a command is transferred to the printer by controlling (control can be practically performed by the OS) the data transfer circuit (not shown in the attached drawings) in step S2005.

Next, in step S2006, the printer receives the print control data. A command analyzing process is performed on the received print control data in step S2007, and encrypted print image data is generated.

Then, the encrypted print image data is converted into print data in a decryption process in step S2008, and the decrypted print data is printed on a storage medium in step S2009.

However, since in the above mentioned system which performs the encryption process between the host computer and the printer, there is a one to one correspondence between the input image and the data transferred to the printer, the encrypted data can be easily decrypted.

That is, it is the same as the case where the control code of the printer used in the conventional system is not open, and there is a problem that the image forgery preventing process cannot be effectively performed.

US 5,633,932 discloses a system and method for preventing a copy of a document to the output from a printing node until the printing node authenticates the intended recipient. The system includes a sending node, a printing node and a communication link coupling these nodes together in a network fashion. The sending node has access to a public key of the printing node and uses this public key to encrypt a header and document before transmission to the printing node over the communication link. The priority node has access to its private key to decrypt the header to ascertain whether the document requires authentication by the intended recipient before being output.

US 5,982,506 discloses a system and method for certified transmission of an electronic document, as verified by the generation of a certification indicia. Three embodiments of the system and method are disclosed, providing for the certified transmission of a document through an independent certification device or for direct transmission from a sender to a recipient. Furthermore, the resulting certification indicia may be generated by an independent certification device or by a portable processor at the sender or receiver's location.

According to the present invention, there is provided:

- an image processing apparatus as set out in claim 1;

- an image data recording device as set out in claim 3;

- a method of controlling an image processing apparatus as set out in claim 6;

- a method of controlling an image data recording device as set out in claim 8;

- a storage medium storing computer program instructions as set out in claim 11; and

- a signal carrying computer program instructions as set out in claim 12.

Optional features are set out in the other claims.

Embodiments will be described by the following explanation based on the attached drawings, in which:

FIG. 1 is a flowchart of the procedure of the operations of the recording system according to the first embodiment of the present invention;

FIG. 2 is a flowchart of the procedure of the encryption process according to the recording system of the conventional technology;

FIG. 3 is a flowchart of the procedure of an encryption process according to the first embodiment of the present invention;

FIG. 4 is a flowchart of the procedure of a decryption process according to the first embodiment of the present invention;

FIG. 5 is a flowchart of the procedure of an encryption table generating process according to the first embodiment of the present invention;

FIG. 6 is a flowchart of the procedure of a decryption table generating process according to the first embodiment of the present invention; and

FIG. 7 is a block diagram of the configuration of an image data recording system in an embodiment.

(First Embodiment)

Embodiments of the present invention are described below in detail by referring to the attached drawings.

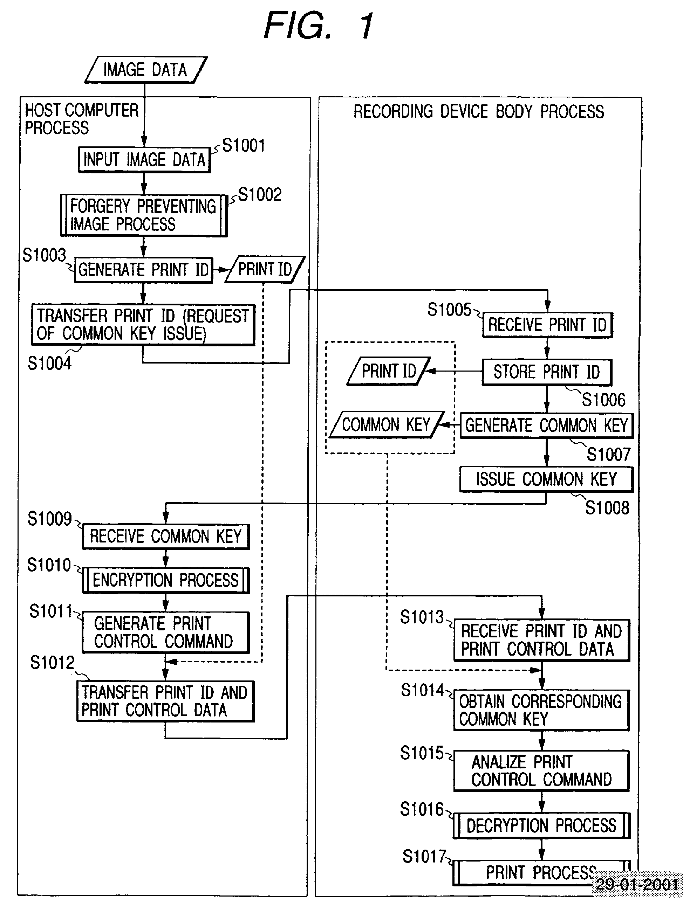

FIG. 1 is a flowchart of the procedure of processing data in the recording system according to the first embodiment.

In FIG. 1, the processes in steps S1001 to S1004 and steps S1009 to S1012 are performed by a host computer. The processes in steps S1005 to S1008 and steps S1013 to S1017 are performed by a recording device.

In the first step S1001, image data is input. Then; in step S1002, an image process including a forgery preventing process is performed.

Next, in step S1003, a print ID is generated, and then the print ID is transferred to a recording device in step S1004.

Next, in step S1005, the recording device receives a print ID, and stores the received print ID in step S1006.

Next, in step S1007, a common key is generated. At this time, the recording device is managed such that a print ID is paired with a common key.

The common key generated in step S1007 is irregularly generated such that the common key cannot be associated with the value of the print ID.

Then, in step S1008, the generated common key is transmitted to the host computer.

The common key transmitted from the recording device is received by the host computer in step S1009. Thus, since the recording device issues the common key in response to the transfer of the print ID of the host computer, the transfer of the print ID in step S1004 indicates a request to issue a common key.

In step 51010, the print image data generated in the process performed in step S1002 is encrypted by the common key received in step S1009.

Then, in step S1011, the encrypted print image data is converted into a print control command. Then, in step S1012, the print ID and the print control data command are transferred to the recording device side.

In step S1013, the recording device receives a print ID and print control data. Then, in step S1014, the common key corresponding to the received print ID is retrieved and obtained from a managed pair of the print ID and the common key. Then, in step S1015, the command of the print control data is analyzed, and the encrypted print image data is extracted.

Then, in step S1016, the print image data is decrypted using the common key obtained in step S1014. In step S1017, the print image data is stored on the storage medium in the print process.

The print data transferring process in steps S1012 and S1013 and the process in steps S1015 to S1017 can be sequentially repeated in parallel. Although not shown in FIG. 1, the used print ID and the common key paired therewith may be discarded after performing the print process in step S1017.

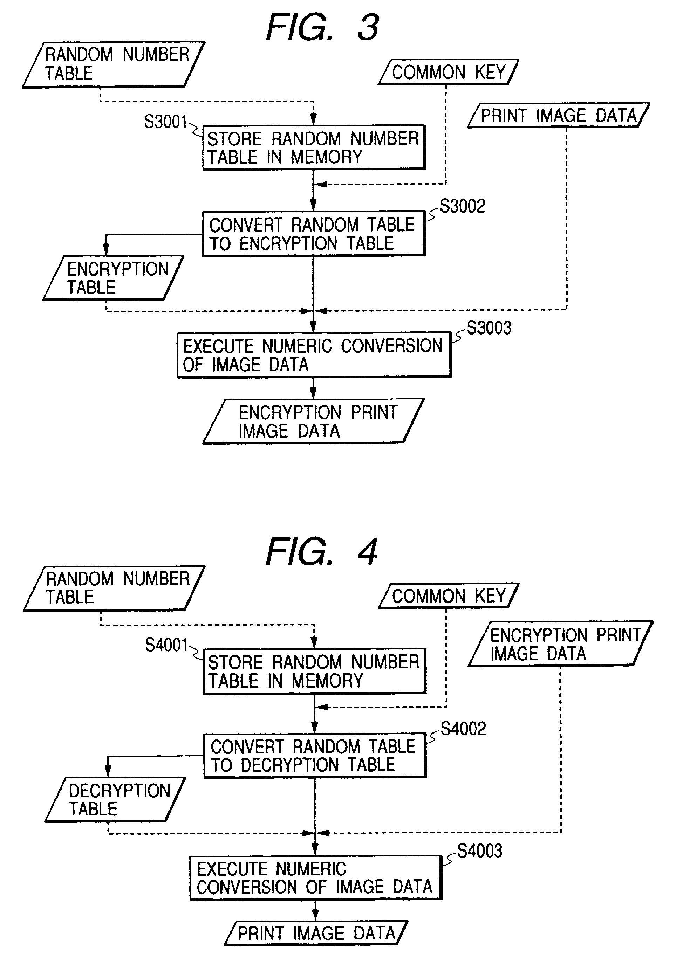

FIG. 3 is a flowchart of the contents of the encryption process performed in step S1010.

The random number table according to this embodiment comprises series of irregularly arranged integers (1-byte length each) of "0" to "255". That is, the table size is 256 bytes. The common key is formed by integers from 0 to 255.

First, in step S3001, a random number table is stored on the memory (RAM) of the host computer. Then, in step S3002, the random number table on the memory (RAM) is converted into an encryption table using a common key.

In step S3003, the print image data is encrypted using the generated encryption table. In this case, the print image data is sequentially read in a byte unit, the data value of one read byte is set as an offset from the leading address of the encryption table, and the value of the corresponding address is set as the encryption print image data.

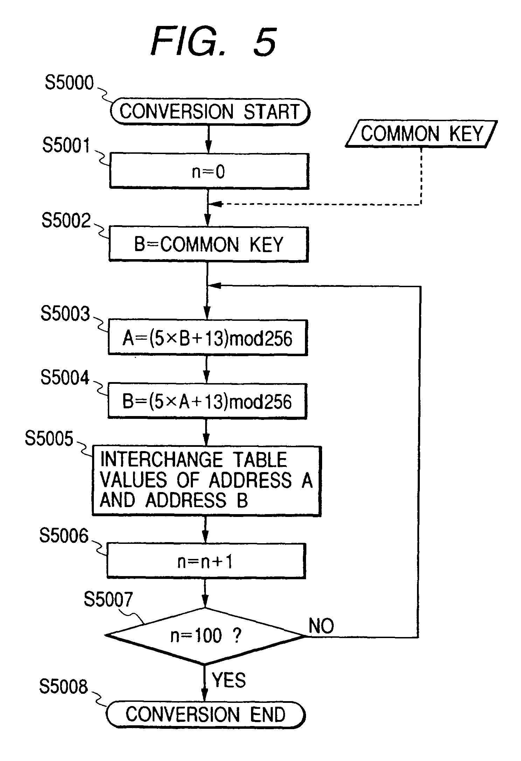

FIG. 5 is a flowchart of the process performed in step S3002.

First, in step S5000, the process is started. then, in step S5001, a variable n is set to "0". The variable n is a management counter for 100 times repetition of the processes in steps S5003 to S5005 described later.

Then, in step S5002, the value of the common key is assigned to a variable B. Then, in step S5003, a variable A is computed using the variable B by the following Equation (1). 'mod' is a well-known function for use in obtaining a residue in a division.

$$A = (5 \times B + 13) \bmod 256 \ ... \ (1)$$

Next, in step S5004, the variable B is computed using the variable A by the following Equation (2).

$$B = (5 \times A + 13) \bmod 256 \ ... \ (2)$$

In the computation by the Equations (1) and (2), pseudo random numbers are generated in a linear congruential method. That is, the common key is used for the initial value in the linear congruential method.

Then, in step S5005, the table value whose offset from the leading address of the random number table stored in the memory in step S3001 is A and the table value whose offset is B are interchanged. Then, in step S5006, n is incremented by 1.

It is determined in step S5007 whether or not n is "100". If it is "100", then control is passed to step S5008, and the converting operation terminates. If it is determined in step S5007 that n is not 100, control is passed to step S5003.

FIG. 4 is a flowchart explaining the procedure of the decryption process performed in step S1016. The random number table used in this embodiment is the same table as that used in the process in step S3001.

First, in step S4001, the random number table is developed on the memory (RAM) of the recording device.

Then, in step S4002, the random number table on the memory (RAM) is converted into a decryption table using a common key. In the obtained decryption table, the offset value from the leading address of the series and the integer stored at the address can be obtained by interchanging the values on the above mentioned encryption table.

For example, when the 25th value from the start of the encryption table is "12", the 12th value from the start of the decryption table is "25" (assume that the start of the table is set to 0).

That is, the encryption table is an inverse conversion table of the decryption table. Assuming that a function A () indicates the conversion using the encryption table and a function B() indicates the conversion using the decryption table, the following Equations exist.

$$a = A(d), \ d = B(a)$$

Then, the encryption print image data is decrypted using the generated decryption table in step S4003. In step S4003, the encryption print image data is sequentially read in a byte unit. The read 1-byte data value is an offset from the leading address of the encryption table, and the value of the corresponding address is the print image data.

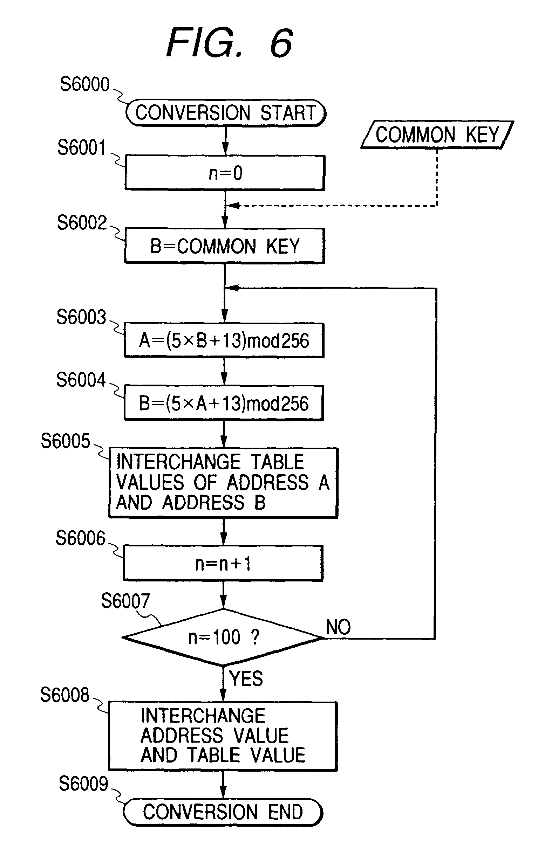

FIG. 6 is a flowchart of the process in step S4002.

In FIG. 6, the processes in steps S6000 to S6007 are the same as the converting operation in steps S5000 to S5007 on the encryption table. After generating the encryption table, the address value and the table value are interchanged in step 56008 for conversion into the decryption table.

The following Tables 1, 2, and 3 are the tables used or generated in this embodiment.

Table 1

| | Random Number Table | | | | | | | | | | | | | | | | | | | | | | |
|---|---|---|---|---|---|---|---|---|---|---|---|---|---|---|---|---|---|---|---|---|---|---|---|
| x | R(x) | | x | R(x) | | x | R(x) | | x | R(x) | | x | R(x) | | x | R(x) | | x | R(x) | | x | R(x) |
| 0 | 88 | | 32 | 184 | | 64 | 24 | | 96 | 120 | | 128 | 216 | | 160 | 56 | | 192 | 152 | | 224 | 248 |
| 1 | 197 | | 33 | 165 | | 65 | 133 | | 97 | 101 | | 129 | 69 | | 161 | 37 | | 193 | 5 | | 225 | 229 |
| 2 | 230 | | 34 | 70 | | 66 | 166 | | 98 | 6 | | 130 | 102 | | 162 | 198 | | 194 | 38 | | 226 | 134 |
| 3 | 139 | | 35 | 107 | | 67 | 75 | | 99 | 43 | | 131 | 11 | | 163 | 235 | | 195 | 203 | | 227 | 171 |
| 4 | 196 | | 36 | 36 | | 68 | 132 | | 100 | 228 | | 132 | 68 | | 164 | 184 | | 196 | 4 | | 228 | 100 |
| 5 | 225 | | 37 | 193 | | 69 | 161 | | 101 | 129 | | 133 | 97 | | 165 | 65 | | 197 | 33 | | 229 | 1 |
| 6 | 114 | | 38 | 210 | | 70 | 50 | | 102 | 146 | | 134 | 242 | | 166 | 82 | | 198 | 178 | | 230 | 18 |
| 7 | 71 | | 39 | 39 | | 71 | 7 | | 103 | 231 | | 135 | 199 | | 167 | 167 | | 199 | 135 | | 231 | 103 |
| 8 | 112 | | 40 | 208 | | 72 | 48 | | 104 | 144 | | 136 | 240 | | 168 | 80 | | 200 | 176 | | 232 | 16 |
| 9 | 61 | | 41 | 29 | | 73 | 253 | | 105 | 221 | | 137 | 189 | | 169 | 157 | | 201 | 125 | | 233 | 93 |
| 10 | 62 | | 42 | 158 | | 74 | 254 | | 106 | 94 | | 138 | 190 | | 170 | 30 | | 202 | 126 | | 234 | 222 |
| 11 | 67 | | 43 | 35 | | 75 | 3 | | 107 | 227 | | 139 | 195 | | 171 | 163 | | 203 | 131 | | 235 | 99 |
| 12 | 92 | | 44 | 188 | | 76 | 29 | | 108 | 124 | | 140 | 220 | | 172 | 60 | | 204 | 156 | | 236 | 252 |
| 13 | 217 | | 45 | 185 | | 77 | 153 | | 109 | 121 | | 141 | 89 | | 173 | 57 | | 205 | 25 | | 237 | 249 |
| 14 | 74 | | 46 | 170 | | 78 | 10 | | 110 | 106 | | 142 | 202 | | 174 | 42 | | 206 | 138 | | 238 | 234 |
| 15 | 127 | | 47 | 95 | | 79 | 63 | | 111 | 31 | | 143 | 255 | | 175 | 223 | | 207 | 191 | | 239 | 159 |
| 16 | 136 | | 48 | 232 | | 80 | 72 | | 112 | 168 | | 144 | 8 | | 176 | 104 | | 208 | 200 | | 240 | 40 |
| 17 | 181 | | 49 | 149 | | 81 | 117 | | 113 | 85 | | 145 | 53 | | 177 | 21 | | 209 | 245 | | 241 | 213 |
| 18 | 150 | | 50 | 246 | | 82 | 86 | | 114 | 182 | | 146 | 22 | | 178 | 118 | | 210 | 214 | | 242 | 54 |
| 19 | 251 | | 51 | 219 | | 83 | 187 | | 115 | 155 | | 147 | 123 | | 179 | 91 | | 211 | 59 | | 243 | 27 |
| 20 | 244 | | 52 | 84 | | 84 | 180 | | 116 | 20 | | 148 | 116 | | 180 | 212 | | 212 | 52 | | 244 | 148 |
| 21 | 209 | | 53 | 177 | | 85 | 145 | | 117 | 113 | | 149 | 81 | | 181 | 49 | | 213 | 17 | | 245 | 241 |
| 22 | 34 | | 54 | 130 | | 86 | 226 | | 118 | 66 | | 150 | 162 | | 182 | 2 | | 214 | 98 | | 246 | 194 |
| 23 | 183 | | 55 | 151 | | 87 | 119 | | 119 | 87 | | 151 | 55 | | 183 | 23 | | 215 | 247 | | 247 | 215 |

| Random Number Table | | | | | | | | | | | | | | | | | | | | | | |
|---|---|---|---|---|---|---|---|---|---|---|---|---|---|---|---|---|---|---|---|---|---|---|
| x | R(x) | | x | R(x) | | x | R(x) | | x | R(x) | | x | R(x) | | x | R(x) | | x | R(x) | | x | R(x) |
| 24 | 160 | | 56 | 0 | | 88 | 96 | | 120 | 192 | | 152 | 32 | | 184 | 128 | | 216 | 224 | | 248 | 64 |
| 25 | 45 | | 57 | 13 | | 89 | 237 | | 121 | 205 | | 153 | 173 | | 185 | 141 | | 217 | 109 | | 249 | 77 |
| 26 | 238 | | 58 | 78 | | 90 | 174 | | 122 | 14 | | 154 | 110 | | 186 | 206 | | 218 | 46 | | 250 | 142 |
| 27 | 179 | | 59 | 147 | | 91 | 115 | | 123 | 83 | | 155 | 51 | | 187 | 19 | | 219 | 243 | | 251 | 211 |
| 28 | 140 | | 60 | 236 | | 92 | 76 | | 124 | 172 | | 156 | 12 | | 188 | 108 | | 220 | 204 | | 252 | 44 |
| 29 | 201 | | 61 | 169 | | 93 | 137 | | 125 | 105 | | 157 | 73 | | 189 | 41 | | 221 | 9 | | 253 | 233 |
| 30 | 250 | | 62 | 90 | | 94 | 186 | | 126 | 26 | | 158 | 122 | | 190 | 218 | | 222 | 58 | | 254 | 154 |
| 31 | 239 | | 63 | 207 | | 95 | 175 | | 127 | 143 | | 159 | 111 | | 191 | 79 | | 223 | 47 | | 255 | 15 |

Table 2

| Encryption Table | | | | | | | | | | | | | | | |
|---|---|---|---|---|---|---|---|---|---|---|---|---|---|---|---|
| x | A(x) | x | A(x) | x | A(x) | x | A(x) | x | A(x) | x | (A(x) | x | A(x) | x | A(x) |
| 0 | 217 | 32 | 57 | 64 | 24 | 96 | 249 | 128 | 89 | 160 | 56 | 192 | 25 | 224 | 121 |
| 1 | 197 | 33 | 196 | 65 | 164 | 97 | 132 | 129 | 100 | 161 | 68 | 193 | 36 | 225 | 229 |
| 2 | 183 | 34 | 70 | 66 | 119 | 98 | 215 | 130 | 55 | 162 | 151 | 194 | 38 | 226 | 87 |
| 3 | 154 | 35 | 122 | 67 | 75 | 99 | 43 | 131 | 26 | 163 | 250 | 195 | 218 | 227 | 186 |
| 4 | 165 | 36 | 5 | 68 | 101 | 100 | 228 | 132 | 37 | 164 | 133 | 196 | 4 | 228 | 69 |
| 5 | 32 | 37 | 0 | 69 | 224 | 101 | 192 | 133 | 160 | 165 | 128 | 197 | 33 | 229 | 64 |
| 6 | 35 | 38 | 131 | 70 | 227 | 102 | 67 | 134 | 242 | 166 | 3 | 198 | 99 | 230 | 18 |
| 7 | 246 | 39 | 214 | 71 | 7 | 103 | 231 | 135 | 118 | 167 | 86 | 199 | 54 | 231 | 22 |
| 8 | 177 | 40 | 208 | 72 | 113 | 104 | 209 | 136 | 240 | 168 | 145 | 200 | 241 | 232 | 81 |
| 9 | 156 | 41 | 124 | 73 | 92 | 105 | 60 | 137 | 28 | 169 | 252 | 201 | 220 | 233 | 93 |
| 10 | 207 | 42 | 47 | 74 | 254 | 106 | 239 | 138 | 79 | 170 | 175 | 202 | 15 | 234 | 222 |
| 11 | 146 | 43 | 114 | 75 | 82 | 107 | 50 | 139 | 195 | 171 | 163 | 203 | 210 | 235 | 178 |
| 12 | 253 | 44 | 188 | 76 | 189 | 108 | 29 | 140 | 125 | 172 | 221 | 204 | 61 | 236 | 157 |
| 13 | 88 | 45 | 185 | 77 | 153 | 109 | 248 | 141 | 216 | 173 | 184 | 205 | 152 | 237 | 120 |
| 14 | 187 | 46 | 27 | 78 | 123 | 110 | 219 | 142 | 202 | 174 | 155 | 206 | 251 | 238 | 91 |
| 15 | 127 | 47 | 78 | 79 | 46 | 111 | 14 | 143 | 238 | 175 | 206 | 207 | 174 | 239 | 142 |
| 16 | 136 | 48 | 233 | 80 | 73 | 112 | 168 | 144 | 9 | 176 | 105 | 208 | 201 | 240 | 41 |
| 17 | 84 | 49 | 52 | 81 | 20 | 113 | 244 | 145 | 212 | 177 | 180 | 209 | 245 | 241 | 213 |
| 18 | 150 | 50 | 71 | 82 | 167 | 114 | 182 | 146 | 103 | 178 | 199 | 210 | 39 | 242 | 135 |
| 19 | 138 | 51 | 106 | 83 | 74 | 115 | 42 | 147 | 10 | 179 | 234 | 211 | 59 | 243 | 170 |
| 20 | 85 | 52 | 181 | 84 | 21 | 116 | 117 | 148 | 116 | 180 | 53 | 212 | 149 | 244 | 148 |
| 21 | 144 | 53 | 112 | 85 | 80 | 117 | 48 | 149 | 16 | 181 | 49 | 213 | 17 | 245 | 176 |
| 22 | 83 | 54 | 130 | 86 | 19 | 118 | 115 | 150 | 162 | 182 | 51 | 214 | 147 | 246 | 243 |
| 23 | 230 | 55 | 198 | 87 | 166 | 119 | 134 | 151 | 102 | 183 | 23 | 215 | 247 | 247 | 6 |

(continued)

| Encryption Table | | | | | | | | | | | | | | | | | | | | | | | |
|---|---|---|---|---|---|---|---|---|---|---|---|---|---|---|---|---|---|---|---|---|---|---|---|
| x | A(x) | | x | A(x) | | x | A(x) | | x | A(x) | | x | A(x) | | x | (A(x) | | x | A(x) | | x | A(x) |
| 24 | 97 | | 56 | 193 | | 88 | 96 | | 120 | 129 | | 152 | 225 | | 184 | 65 | | 216 | 161 | | 248 | 1 |
| 25 | 12 | | 57 | 236 | | 89 | 204 | | 121 | 172 | | 153 | 140 | | 185 | 108 | | 217 | 109 | | 249 | 77 |
| 26 | 255 | | 58 | 95 | | 90 | 191 | | 122 | 31 | | 154 | 110 | | 186 | 223 | | 218 | 63 | | 250 | 159 |
| 27 | 179 | | 59 | 98 | | 91 | 66 | | 123 | 34 | | 155 | 2 | | 187 | 226 | | 219 | 194 | | 251 | 211 |
| 28 | 173 | | 60 | 13 | | 92 | 76 | | 124 | 205 | | 156 | 45 | | 188 | 141 | | 220 | 237 | | 252 | 44 |
| 29 | 200 | | 61 | 169 | | 93 | 137 | | 125 | 104 | | 157 | 72 | | 189 | 40 | | 221 | 8 | | 253 | 232 |
| 30 | 235 | | 62 | 90 | | 94 | 171 | | 126 | 11 | | 158 | 107 | | 190 | 203 | | 222 | 58 | | 254 | 139 |
| 31 | 94 | | 63 | 62 | | 95 | 30 | | 127 | 143 | | 159 | 111 | | 191 | 190 | | 223 | 158 | | 255 | 126 |

Table 3

| Decryption Table | | | | | | | | | | | | | | | |
|---|---|---|---|---|---|---|---|---|---|---|---|---|---|---|---|
| x | B(x) | x | B(x) | x | B(x) | x | B(x) | x | B(x) | x | B(x) | x | B(x) | x | B(x) |
| 0 | 37 | 32 | 5 | 64 | 229 | 96 | 88 | 128 | 165 | 160 | 133 | 192 | 101 | 224 | 69 |
| 1 | 248 | 33 | 197 | 65 | 184 | 97 | 24 | 129 | 120 | 161 | 216 | 193 | 56 | 225 | 152 |
| 2 | 155 | 34 | 123 | 66 | 91 | 98 | 59 | 130 | 54 | 162 | 150 | 194 | 219 | 226 | 187 |
| 3 | 166 | 35 | 6 | 67 | 102 | 99 | 198 | 131 | 38 | 163 | 171 | 195 | 139 | 227 | 70 |
| 4 | 196 | 36 | 193 | 68 | 161 | 100 | 129 | 132 | 97 | 164 | 65 | 196 | 33 | 228 | 100 |
| 5 | 36 | 37 | 132 | 69 | 228 | 101 | 68 | 133 | 164 | 165 | 4 | 197 | 1 | 229 | 225 |
| 6 | 247 | 38 | 194 | 70 | 34 | 102 | 151 | 134 | 119 | 166 | 87 | 198 | 55 | 230 | 23 |
| 7 | 71 | 39 | 210 | 71 | 50 | 103 | 146 | 135 | 242 | 167 | 82 | 199 | 178 | 231 | 103 |
| 8 | 221 | 40 | 189 | 72 | 157 | 104 | 125 | 136 | 16 | 168 | 112 | 200 | 29 | 232 | 253 |
| 9 | 144 | 41 | 240 | 73 | 80 | 105 | 176 | 137 | 93 | 169 | 61 | 201 | 208 | 233 | 48 |
| 10 | 147 | 42 | 115 | 74 | 83 | 106 | 51 | 138 | 19 | 170 | 243 | 202 | 142 | 234 | 179 |
| 11 | 126 | 43 | 99 | 75 | 67 | 107 | 158 | 139 | 254 | 171 | 94 | 203 | 190 | 235 | 30 |
| 12 | 25 | 44 | 252 | 76 | 92 | 108 | 185 | 140 | 153 | 172 | 121 | 204 | 89 | 236 | 57 |
| 13 | 60 | 45 | 156 | 77 | 249 | 109 | 217 | 141 | 188 | 173 | 28 | 205 | 124 | 237 | 220 |
| 14 | 111 | 46 | 79 | 78 | 47 | 110 | 154 | 142 | 239 | 174 | 207 | 206 | 175 | 238 | 143 |
| 15 | 202 | 47 | 42 | 79 | 138 | 111 | 159 | 143 | 127 | 175 | 170 | 207 | 10 | 239 | 106 |
| 16 | 149 | 48 | 117 | 80 | 85 | 112 | 53 | 144 | 21 | 176 | 245 | 208 | 40 | 240 | 136 |
| 17 | 213 | 49 | 181 | 81 | 232 | 113 | 72 | 145 | 168 | 177 | 8 | 209 | 104 | 241 | 200 |
| 18 | 230 | 50 | 107 | 82 | 75 | 114 | 43 | 146 | 11 | 178 | 235 | 210 | 203 | 242 | 134 |
| 19 | 86 | 51 | 182 | 83 | 22 | 115 | 118 | 147 | 21 | 179 | 27 | 211 | 251 | 243 | 246 |
| 20 | 81 | 52 | 49 | 84 | 17 | 116 | 148 | 148 | 244 | 180 | 177 | 212 | 145 | 244 | 113 |
| 21 | 84 | 53 | 180 | 85 | 20 | 117 | 116 | 149 | 212 | 181 | 52 | 213 | 241 | 245 | 209 |
| 22 | 231 | 54 | 199 | 86 | 167 | 118 | 135 | 150 | 18 | 182 | 114 | 214 | 39 | 246 | 7 |
| 23 | 183 | 55 | 130 | 87 | 226 | 119 | 66 | 151 | 162 | 183 | 2 | 215 | 98 | 247 | 215 |

EP 1 122 941 B1

(continued)

| Decryption Table | | | | | | | | | | | | | | | | | | | | | | |
|---|---|---|---|---|---|---|---|---|---|---|---|---|---|---|---|---|---|---|---|---|---|---|
| x | B(x) | | x | B(x) | | x | B(x) | | x | B(x) | | x | B(x) | | x | B(x) | | x | B(x) | | x | B(x) |
| 24 | 64 | | 56 | 160 | | 88 | 13 | | 120 | 237 | | 152 | 205 | | 184 | 173 | | 216 | 141 | | 248 | 109 |
| 25 | 192 | | 57 | 32 | | 89 | 128 | | 121 | 224 | | 153 | 77 | | 185 | 45 | | 217 | 0 | | 249 | 96 |
| 26 | 131 | | 58 | 222 | | 90 | 62 | | 122 | 35 | | 154 | 3 | | 186 | 227 | | 218 | 195 | | 250 | 163 |
| 27 | 46 | | 59 | 211 | | 91 | 238 | | 123 | 78 | | 155 | 174 | | 187 | 14 | | 219 | 110 | | 251 | 206 |
| 28 | 137 | | 60 | 105 | | 92 | 73 | | 124 | 41 | | 156 | 9 | | 188 | 44 | | 220 | 201 | | 252 | 169 |
| 29 | 108 | | 61 | 204 | | 93 | 233 | | 125 | 140 | | 157 | 236 | | 189 | 76 | | 221 | 172 | | 253 | 12 |
| 30 | 95 | | 62 | 63 | | 94 | 31 | | 126 | 255 | | 158 | 223 | | 190 | 191 | | 222 | 234 | | 254 | 74 |
| 31 | 122 | | 63 | 218 | | 95 | 58 | | 127 | 15 | | 159 | 250 | | 191 | 90 | | 223 | 186 | | 255 | 26 |

The above mentioned Table 1 is an example of the random number table according to this embodiment- The Table 2 is an encryption table when the common key is "15" in this embodiment. The Table 3 is a decryption table when the common key is "15" in this embodiment.

In the above mentioned embodiment, the encryption process and the decryption process are performed by the conversion system using the tables. This system requires a smaller load in performing an operation, thereby preventing the printing speed from being reduced.

Furthermore, according to this embodiment, the recording device manages both print ID and common key. Therefore, when the recording device is connected to a plurality of host computers, the print process can be performed in the transfer order of print control data regardless of the common key issue order.

(Other Embodiments)

In the above mentioned embodiment. an encryption table is generated by converting a random number table using a common key, but the encryption table can be the common key- Furthermore, the common key can be used as a parameter in the congruential method, and an encryption table can be generated by generating pseudo random numbers.

The encryption table may be generated by conversion using the common key according to not only the congruential method but also an average method. Since a common key of a specified value can be issued in the above mentioned embodiments, the value of an internal timer of the recording device can be used.

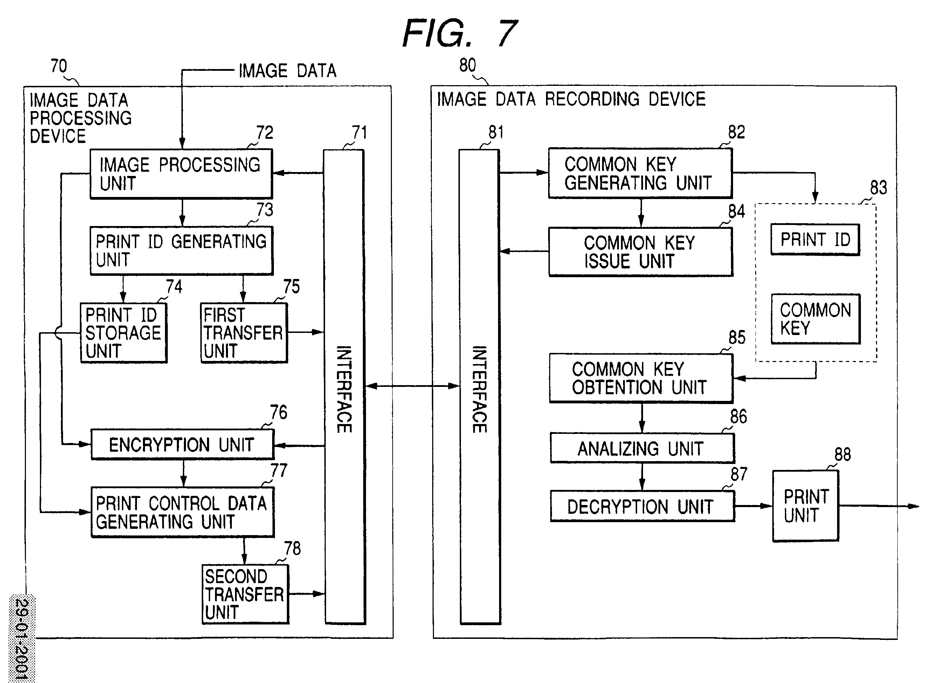

An example of the configuration of the image data recording system in an embodiment is described below by referring to the block diagram shown in FIG. 7.

In FIG. 7, reference numeral 70 denotes an image data processing device; reference numeral 71 denotes an interface: reference numeral 72 denotes an image processing unit; reference numeral 73 denotes a print ID generating unit; reference numeral 74 denotes a print ID storage unit; reference numeral 75 denotes a first transfer unit; reference numeral 76 denotes an encryption unit; reference numeral 77 denotes a print control data generating unit; and reference numeral 78 denotes a second transfer unit.

Furthermore, reference numeral 80 denotes an image data recording device; reference numeral 81 denotes an interface; reference numeral 82 denotes a common key generating unit; reference numeral 83 denotes a management unit; reference numeral 84 denotes a common key issue unit; reference numeral 85 denotes a common key obtaining unit; reference numeral 86 denotes an analyzing unit; reference numeral 87 denotes a decryption unit; and reference numeral 88 denotes a print unit.

As shown in FIG. 7, the image data recording system comprises the image data processing device 70 and the image data recording device 80. Through the interface 71 and the interface 81 respectively provided in the image data processing device 70 and the image data recording device 80, various data and commands are transmitted and received to print the image data input to the image data processing device 70 on the image data recording device 80, and then output.

In FIG. 7, the image processing unit 72 performs the image process including the forgery preventing process on the input image data. The print ID generating unit 73 generates a print ID corresponding to the image data processed by the image processing unit 72 in the forgery preventing process. The generated print ID is stored in the print ID storage unit 74, and transferred by the first transfer unit 75 to the image data recording device 80.

The encryption unit 76 encrypts the image data processed by the image processing unit 72 in the predetermined processes using the common key transmitted from the image data recording device 80. The print control data generating unit 77 generates print control data by converting the print image data encrypted by the encryption unit 76 into a print control command. Then, the generated print control data and the print ID generated by the print ID generating unit 73 and stored in the print ID storage unit 74 are transferred by the second transfer unit 78 to the image data recording device 80.

The common key generating unit 82 generates a common key based on the print ID transferred from the image data processing device 70. Then, the generated common key and the transferred print ID are stored and managed in the memory of the management unit 83.

The common key issue unit 84 transmits the common key generated by the common key generating unit 82 to the image data processing device 70. When the print ID and the print control data are transmitted from the image data processing device 70, the common key obtaining unit 85 obtains a common key corresponding to the print ID from the management unit 83.

The analyzing unit 86 analyzes the command of the above mentioned print data using the common key obtained by the common key obtaining unit 85, and extracts the encrypted print image data. The decryption unit 87 decrypts the print image data extracted by the analyzing unit 86 using the common key obtained by the common key obtaining unit 85. Then, the decrypted print image data is stored in a storage medium (not shown in the attached drawings) by the print unit 88.

An embodiment of the present invention may be achieved by providing a program code of software for realizing the functions of the above mentioned embodiments for the computer in the device or the system connected to each of the above mentioned devices so that various devices can be operated to realize the functions of the above mentioned embodiments, and the above mentioned devices are operated according to the program stored in the computer (CPU or MPU) of the system or the device.

In this case, the program code of the software realizes the functions of the above mentioned embodiment, and the program code itself and the unit for providing the program code for the computer, for example, a storage medium storing the program code constitute an embodiment. The storage medium storing the program code can be, for example, a floppy disk, a hard disk, an optical disk, a magneto-optical disk, CD-ROM, a magnetic tape, a non-volatile memory card, ROM, etc.

In addition, it is needless to say that an embodiment includes not only the case where the function described in the above description of the embodiment is realized by a computer executing the program code provided thereto, but also the case where the function is realized by the program code cooperating with the OS (operating system) or other application software operating in the computer.

Furthermore, after the provided program code is stored in the memory in a function extension board of a computer or a function extension unit connected to the computer, the CPU, etc. provided in the function extension board or the function extension unit can perform all or part of an actual process at an instruction of the program code to realize the function of the above mentioned embodiment in the process. An embodiment also includes the above mentioned case.

As described above, the print control data is encrypted using a common key issued by an image data recording device. Therefore, when the image data processing device generates a recording image by controlling the image data recording device, the image data recording device which has issued the common key is required, thereby effectively preventing a number of unspecified image data recording devices from printing image data, and ensuring that the forgery preventing process is performed by the image data processing device. Thus, the forgery of bills, valuable securities, etc. can be prevented without fail.

**Claims**

**1.** An image processing apparatus (70), comprising:

image process means (72) for performing an image process including a forgery preventing process on input image data;

**characterised by**:

print ID generating means (73) for generating a print ID corresponding to the image data on which said image process means has performed the forgery preventing process;
means (71, 75) arranged to transfer the print ID generated by said print ID generating means to an image data recording device (80);
encryption means (76) for encrypting the image data on which said image process means has performed the forgery preventing process using an encryption key transmitted from said image data recording device;
print control data generating means (77) for generating print control data by converting the image data encrypted by said encryption means into a print control command; and
means (71, 78) arranged to transfer the print control data generated by said print control data generating means and the print ID generated by said print ID generating means to said image data recording device.

**2.** The apparatus according to claim 1, wherein said encryption means (76) is operable to perform the encryption process using a conversion table generated using said encryption key.

**3.** An image data recording device (80), **characterised by**:

encryption key generating means (82) for generating an encryption key based on a print ID transferred from an image data processing device (70);
management means (83) for pairing the encryption key generated by said encryption key generating means with the print ID transferred from said image data processing device;
encryption key issue means (84) for transmitting the encryption key generated by said encryption key generating means to said image data processing device;
encryption key obtaining means (85) for obtaining the encryption key corresponding to the print ID from said management means when the print ID and print control data are received from said image data processing device;
analyzing means (86) for extracting encrypted print image data by analyzing a command of the print control data;
decryption means (87) for decrypting the print image data extracted by said analyzing means using the encryption key obtained by said encryption key obtaining means; and
print means (88) for recording the print image data decrypted by said decryption means on a recording medium.

4. The apparatus according to claim 3, wherein said encryption key generating means (82) is arranged to generate the encryption key without regularity independent of the value of the print ID.

5. The apparatus according to claim 3, wherein said decryption means (87) is operable to perform the decryption process using a conversion table generated using said encryption key.

6. A method of controlling an image processing apparatus, comprising:

   performing an image process including a forgery preventing process on input image data (S1002);

   **characterised by**:

   generating a print ID corresponding to the image data on which the forgery preventing process has been performed (S1003);
   transferring the generated print ID to an image data recording device (S1004);
   encrypting the image data on which the forgery preventing process has been performed using an encryption key transmitted from said image data recording device (S1010);
   generating print control data by converting the encrypted image data into a print control command (S1011); and
   transferring the print control data and the print ID to said image data recording device (S1012).

7. The method according to claim 6, wherein the encryption process is performed using a conversion table generated using said encryption key.

8. A method of controlling an image data recording device, **characterised by**:

   generating an encryption key based on a print ID transferred from an image data processing device (S1005, S1007);
   pairing the generated encryption key with the print ID transferred from said image data processing device;
   transmitting the generated encryption key to said image data processing device (S1008);
   retrieving the encryption key corresponding to the print ID when the print ID and print control data are received from said image data processing device (S1013, S1014);
   extracting encrypted print image data by analyzing a command of the print control data (S1015);
   decrypting the extracted print image data using the retrieved encryption key (S1016); and
   recording the decrypted print image data on a recording medium (S1017).

9. The method according to claim 8, wherein the encryption key is generated without regularity independent of the value of the print ID.

10. The method according to claim 8, wherein the decryption process is performed using a conversion table generated using said encryption key.

11. A storage medium storing computer program instructions to program a programmable processing apparatus to become operable to perform a method as set out in at least one of claims 6 to 10.

12. A signal carrying computer program instructions to program a programmable processing apparatus to become operable to perform a method as set out in at least one of claims 6 to 10.

**Patentansprüche**

1. Bildverarbeitungsvorrichtung (70) mit:

einer Bildprozesseinrichtung (72) zum Durchführen eines Bildprozesses einschließlich eines Fälschungsschutzprozesses an eingegebenen Bilddaten,

**gekennzeichnet durch**

eine Druckkennungserzeugungseinrichtung (73) zum Erzeugen einer Druckkennung, die den Bilddaten entspricht, bei denen die Bildprozesseinrichtung den Fälschungsschutzprozess durchführte,
eine Einrichtung (71, 75), die angepasst ist, die durch die Druckkennungserzeugungseinrichtung erzeugte Druckkennung zu einem Bilddatenaufzeichnungsgerät (80) zu übermitteln,
eine Verschlüsselungseinrichtung (76) zum Verschlüsseln der Bilddaten, an denen die Bildprozesseinrichtung den Fälschungsschutzprozess unter Verwendung eines von dem Bilddatenaufzeichnungsgerät übertragenen Verschlüsselungsschlüssels durchführte,
eine Drucksteuerdatenerzeugungseinrichtung (77) zum Erzeugen von Drucksteuerdaten **durch** Umwandeln der **durch** die Verschlüsselungseinrichtung verschlüsselten Bilddaten in einen Drucksteuerbefehl, und
eine Einrichtung (71, 78), die angepasst ist, die durch die Drucksteuerdatenerzeugungseinrichtung erzeugten Drucksteuerdaten und die **durch** die Druckkennungserzeugungseinrichtung erzeugte Druckkennung zu dem Bilddatenaufzeichnungsgerät zu übermitteln.

2. Vorrichtung gemäß Anspruch 1, in der die Verschlüsselungseinrichtung (76) betreibbar ist, den Verschlüsselungsprozess unter Verwendung einer Umwandlungstabelle durchzuführen, die unter Verwendung des Verschlüsselungsschlüssels erzeugt ist.

3. Bilddatenaufzeichnungsgerät (80), **gekennzeichnet durch**:

eine Verschlüsselungsschlüsselerzeugungseinrichtung (82) zum Erzeugen eines Verschlüsselungsschlüssels auf der Grundlage einer von einem Bilddatenverarbeitungsgerät (70) übermittelten Druckkennung,
eine Verwaltungseinrichtung (83) zum paarweisen Anordnen des **durch** die Verschlüsselungsschlüsselerzeugungseinrichtung erzeugten Verschlüsselungsschlüssels mit der von dem Bilddatenverarbeitungsgerät übermittelten Druckkennung,
eine Verschlüsselungsschlüsselherausgabeeinrichtung (84) zum Übertragen des **durch** die Verschlüsselungsschlüsselerzeugungseinrichtung erzeugten Verschlüsselungsschlüssels an das Bilddatenverarbeitungsgerät,
eine Verschlüsselungsschlüsselbeschaffungseinrichtung (85) zum Beschaffen des der Druckkennung entsprechenden Verschlüsselungsschlüssels von der Verwaltungseinrichtung, wenn die Druckkennung und Drucksteuerdaten von dem Bilddatenverarbeitungsgerät empfangen werden,
eine Analyseeinrichtung (86) zum Entnehmen von verschlüsselten Druckbilddaten **durch** Analysieren eines Befehls der Drucksteuerdaten,
eine Entschlüsselungseinrichtung (87) zum Entschlüsseln der **durch** die Analyseeinrichtung entnommenen Druckbilddaten unter Verwendung des **durch** die Verschlüsselungsschlüsselbeschaffungseinrichtung beschafften Verschlüsselungsschlüssels, und
eine Druckeinrichtung (88) zum Aufzeichnen der **durch** die Entschlüsselungseinrichtung entschlüsselten Druckbilddaten auf einem Aufzeichnungsmedium.

4. Vorrichtung gemäß Anspruch 3, wobei die Verschlüsselungsschlüsselerzeugungseinrichtung (82) angepasst ist, den Verschlüsselungsschlüssel ohne Regelmäßigkeit unabhängig von dem Wert der Druckkennung zu erzeugen.

5. Vorrichtung gemäß Anspruch 3, wobei die Entschlüsselungseinrichtung (87) betreibbar ist, den Entschlüsselungsprozess unter Verwendung einer Umwandlungstabelle durchzuführen, die unter Verwendung des Verschlüsselungsschlüssels erzeugt ist.

6. Verfahren zum Steuern einer Bildverarbeitungsvorrichtung, mit:

Durchführen eines Bildprozesses einschließlich eines Fälschungsschutzprozesses an eingegebenen Bilddaten (S1002),

**gekennzeichnet durch**:

Erzeugen einer Druckkennung, die den Bilddaten entspricht, bei denen der Fälschungsschutzprozess durchgeführt wurde (51003),
Übermitteln der erzeugten Druckkennung zu einem Bilddatenaufzeichnungsgerät (S1004),

Verschlüsseln der Bilddaten, an denen der Fälschungsschutzprozess durchgeführt wurde, unter Verwendung eines von dem Bilddatenaufzeichnungsgerät übertragenen Verschlüsselungsschlüssels (S1010),
Erzeugen von Drucksteuerdaten **durch** Umwandeln der verschlüsselten Bilddaten in einen Drucksteuerbefehl (S1011), und
Übermitteln der Drucksteuerdaten und der Druckkennung zu dem Bilddatenaufzeichnungsgerät (S1012).

7. Verfahren gemäß Anspruch 6, in dem der Verschlüsselungsprozess unter Verwendung einer Umwandlungstabelle durchgeführt wird, die unter Verwendung des Verschlüsselungsschlüssels erzeugt wird.

8. Verfahren zum Steuern eines Bilddatenaufzeichnungsgeräts, **gekennzeichnet durch**:

Erzeugen eines Verschlüsselungsschlüssels auf der Grundlage einer von einem Bilddatenverarbeitungsgerät übermittelten Druckkennung (S1005, 51007),
paarweises Anordnen des erzeugten Verschlüsselungsschlüssels mit der von dem Bilddatenverarbeitungsgerät übermittelten Druckkennung,
Übertragen des erzeugten Verschlüsselungsschlüssels zu dem Bilddatenverarbeitungsgerät (S1008),
Holen des der Druckkennung entsprechenden Verschlüsselungsschlüssels, wenn die Druckkennung und Drucksteuerdaten von dem Bilddatenverarbeitungsgerät empfangen werden (S1013, S1014),
Entnehmen von verschlüsselten Druckbilddaten **durch** Analysieren eines Befehls der Drucksteuerdaten (S1015),
Entschlüsseln der entnommenen Druckbilddaten unter Verwendung des geholten Verschlüsselungsschlüssels (S1016), und
Aufzeichnen der entschlüsselten Druckbilddaten auf einem Aufzeichnungsmedium (S1017).

9. Verfahren gemäß Anspruch 8, wobei der Verschlüsselungsschlüssel ohne Regelmäßigkeit unabhängig von dem Wert der Druckkennung erzeugt wird.

10. Verfahren gemäß Anspruch 8, wobei der Entschlüsselungsprozess unter Verwendung einer Umwandlungstabelle durchgeführt wird, die unter Verwendung des Verschlüsselungsschlüssels erzeugt wird.

11. Speichermedium, das Computerprogrammanweisungen speichert, um eine programmierbare Verarbeitungsvorrichtung zu programmieren, betreibbar zu werden, ein Verfahren gemäß zumindest einem der Ansprüche 6 bis 10 durchzuführen.

12. Signal, das Computerprogrammanweisungen trägt, um eine programmierbare Verarbeitungsvorrichtung zu programmieren, betreibbar zu werden, ein Verfahren gemäß zumindest einem der Ansprüche 6 bis 10 durchzuführen.

**Revendications**

1. Appareil de traitement d'image (70), comprenant :

un moyen de traitement d'image (72), destiné à exécuter un traitement d'image comprenant un traitement de prévention de contrefaçon sur des données d'image d'entrée ;

**caractérisé par** :

un moyen de production d'identificateur d'impression (73), destiné à produire un identificateur d'impression correspondant aux données d'image sur lesquelles ledit moyen de traitement d'image a exécuté le traitement de prévention de contrefaçon ;
un moyen (71, 75) conçu pour transférer l'identificateur d'impression produit par ledit moyen de production d'identificateur d'impression vers un dispositif d'enregistrement de données d'image (80) ;
un moyen de chiffrement (76), destiné à chiffrer les données d'image, sur lesquelles ledit moyen de traitement d'image a exécuté le processus de prévention de contrefaçon, à l'aide d'une clef de chiffrement émise à partir dudit dispositif d'enregistrement de données d'image ;
un moyen de production de données de commande d'impression (77), destiné à produire des données de commande d'impression en convertissant les données d'image chiffrées par ledit moyen de chiffrement en une instruction de commande d'impression ; et

un moyen (71, 78) conçu pour transférer les données de commande d'impression, produites par ledit moyen de production de données de commande d'impression, et l'identificateur d'impression, produit par ledit moyen de production d'identificateur d'impression, vers ledit dispositif d'enregistrement de données d'image.

**2.** Appareil selon la revendication 1, dans lequel ledit moyen de chiffrement (76) est en mesure d'exécuter le processus de chiffrement en utilisant une table de conversion produite à l'aide de ladite clef de chiffrement.

**3.** Dispositif d'enregistrement de données d'image (80), **caractérisé par** :

un moyen de production de clef de chiffrement (82), destiné à produire une clef de chiffrement sur la base d'un identificateur d'impression transféré depuis un dispositif de traitement de données d'image (70) ;
un moyen de gestion (83), destiné à associer la clef de chiffrement produite par ledit moyen de production de clef de chiffrement et l'identificateur d'impression transféré depuis ledit dispositif de traitement de données d'image ;
un moyen de publication de clef de chiffrement (84), destiné à émettre la clef de chiffrement produite par ledit moyen de production de clef de chiffrement vers ledit dispositif de traitement de données d'image ;
un moyen d'obtention de clef de chiffrement (85), destiné à obtenir la clef de chiffrement correspondant à l'identificateur d'impression auprès dudit moyen de gestion lorsque l'identificateur d'impression et les données de commande d'impression sont reçues dudit dispositif de traitement de données d'image ;
un moyen d'analyse (86), destiné à extraire des données d'image à imprimer chiffrées en analysant une instruction dans les données de commande d'impression ;
un moyen de déchiffrement (87), destiné à déchiffrer les données d'image à imprimer extraites par ledit moyen d'analyse, à l'aide de la clef de chiffrement obtenue par ledit moyen d'obtention de clef de chiffrement ; et
un moyen d'impression (88), destiné à enregistrer les données d'image à imprimer déchiffrées par ledit moyen de déchiffrement sur un support d'enregistrement.

**4.** Appareil selon la revendication 3, dans lequel ledit moyen de production de clef de chiffrement (82) est conçu pour produire la clef de chiffrement sans régularité, indépendamment de la valeur de l'identificateur d'impression.

**5.** Appareil selon la revendication 3, dans lequel ledit moyen de déchiffrement (87) est en mesure d'exécuter le processus de déchiffrement en utilisant une table de conversion produite à l'aide de ladite clef de chiffrement.

**6.** Procédé de commande d'un appareil de traitement d'image, consistant à :

exécuter un traitement d'image comprenant un traitement de prévention de contrefaçon sur des données d'image d'entrée (S1002) ;

**caractérisé par** les étapes consistant à :

produire un identificateur d'impression correspondant aux données d'image sur lesquelles ledit moyen de traitement d'image a exécuté le traitement de prévention de contrefaçon (S1003) ;
transférer l'identificateur d'impression produit vers un dispositif d'enregistrement de données d'image (S1004) ;
chiffrer les données d'image, sur lesquelles le processus de prévention de contrefaçon a été exécuté, à l'aide d'une clef de chiffrement émise à partir dudit dispositif d'enregistrement de données d'image (S1010) ;
produire des données de commande d'impression en convertissant les données d'image chiffrées en une instruction de commande d'impression (S1011) ; et
transférer les données de commande d'impression et l'identificateur d'impression vers ledit dispositif d'enregistrement de données d'image (S1012).

**7.** Procédé selon la revendication 6, dans lequel le processus de chiffrement est exécuté en utilisant une table de conversion produite à l'aide de ladite clef de chiffrement.

**8.** Procédé de commande d'un dispositif d'enregistrement de données d'image, **caractérisé par** les étapes consistant à :

produire une clef de chiffrement sur la base d'un identificateur d'impression transféré depuis un dispositif de traitement de données d'image (S1005, S1007) ;
associer la clef de chiffrement produite et l'identificateur d'impression transféré depuis ledit dispositif de traitement de données d'image ;

émettre la clef de chiffrement produite vers ledit dispositif de traitement de données d'image (S1008) ;

récupérer la clef de chiffrement correspondant à l'identificateur d'impression lorsque l'identificateur d'impression et les données de commande d'impression sont reçues dudit dispositif de traitement de données d'image (S1013, S1014) ;

extraire des données d'image à imprimer chiffrées en analysant une instruction dans les données de commande d'impression (S1015) ;

déchiffrer les données d'image à imprimer extraites, à l'aide de la clef de chiffrement récupérée (S1016) ; et

enregistrer les données d'image à imprimer déchiffrées sur un support d'enregistrement (S1017).

9. Procédé selon la revendication 8, dans lequel la clef de chiffrement est produite sans régularité, indépendamment de la valeur de l'identificateur d'impression.

10. Procédé selon la revendication 8, dans lequel le processus de déchiffrement est exécuté en utilisant une table de conversion produite à l'aide de ladite clef de chiffrement.

11. Support de stockage stockant des instructions de programme d'ordinateur destinées à programmer un appareil de traitement programmable afin qu'il soit en mesure d'exécuter un procédé selon l'une quelconque des revendications 6 à 10.

12. Signal transportant des instructions de programme d'ordinateur destinées à programmer un appareil de traitement programmable afin qu'il soit en mesure d'exécuter un procédé selon l'une quelconque des revendications 6 à 10.

# FIG. 1

## FIG. 2

/ IMAGE DATA /

**HOST COMPUTER PROCESS**

INPUT IMAGE DATA — S2001

S2002 — FORGERY PREVENTING IMAGE PROCESS

S2003 — ENCRYPTION PROCESS

S2004 — GENERATE PRINT CONTROL COMMAND

S2005 — TRANSFER PRINT CONTROL DATA

**RECORDING DEVICE BODY PROCESS**

RECEIVE PRINT CONTROL DATA — S2006

ANALIZE PRINT CONTROL COMMAND — S2007

DECRYPTION PROCESS — S2008

PRINT PROCESS — S2009

29-01-200

# FIG. 3

RANDOM NUMBER TABLE

COMMON KEY

PRINT IMAGE DATA

S3001 — STORE RANDOM NUMBER TABLE IN MEMORY

CONVERT RANDOM TABLE TO ENCRYPTION TABLE — S3002

ENCRYPTION TABLE

EXECUTE NUMERIC CONVERSION OF IMAGE DATA — S3003

ENCRYPTION PRINT IMAGE DATA

# FIG. 4

RANDOM NUMBER TABLE

COMMON KEY

ENCRYPTION PRINT IMAGE DATA

S4001 — STORE RANDOM NUMBER TABLE IN MEMORY

CONVERT RANDOM TABLE TO DECRYPTION TABLE — S4002

DECRYPTION TABLE

EXECUTE NUMERIC CONVERSION OF IMAGE DATA — S4003

PRINT IMAGE DATA

# FIG. 5

S5000 CONVERSION START

S5001 n=0

COMMON KEY

S5002 B=COMMON KEY

S5003 A=(5×B+13)mod256

S5004 B=(5×A+13)mod256

S5005 INTERCHANGE TABLE VALUES OF ADDRESS A AND ADDRESS B

S5006 n=n+1

S5007 n=100 ? NO

YES

S5008 CONVERSION END

# FIG. 6

S6000 — CONVERSION START

S6001 — n=0

COMMON KEY

S6002 — B=COMMON KEY

S6003 — A=(5×B+13)mod256

S6004 — B=(5×A+13)mod256

S6005 — INTERCHANGE TABLE VALUES OF ADDRESS A AND ADDRESS B

S6006 — n=n+1

S6007 — n=100 ? — NO

YES

S6008 — INTERCHANGE ADDRESS VALUE AND TABLE VALUE

S6009 — CONVERSION END

FIG. 7

80 IMAGE DATA RECORDING DEVICE

83
PRINT ID
COMMON KEY

88 PRINT UNIT

82 COMMON KEY GENERATING UNIT
84 COMMON KEY ISSUE UNIT
85 COMMON KEY OBTENTION UNIT
86 ANALIZING UNIT
87 DECRYPTION UNIT

81 INTERFACE

70 IMAGE DATA PROCESSING DEVICE

IMAGE DATA

71 INTERFACE

72 IMAGE PROCESSING UNIT
73 PRINT ID GENERATING UNIT
74 PRINT ID STORAGE UNIT
75 FIRST TRANSFER UNIT
76 ENCRYPTION UNIT
77 PRINT CONTROL DATA GENERATING UNIT
78 SECOND TRANSFER UNIT

29-01-2001

**EP 1 122 941 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5502575 A
- US 5633932 A
- US 5982506 A